# EUROPEAN PATENT SPECIFICATION

(11) **EP 0 776 692 B1**
(45) Date of publication and mention of the grant of the patent: **11.08.1999**
(21) Application number: 96119068.3
(22) Date of filing: 28.11.1996
(51) Int. Cl.: B01J 8/18, F28D 7/08, F28F 9/013, B01J 8/24

(54) **Fluidized-bed reactor**
Wirbelschichtbettreaktor
Réacteur à lit fluidisé

(30) Priority: 01.12.1995 US 566338
(43) Date of publication of application: 04.06.1997
(73) Proprietor: DOW CORNING CORPORATION, Midland Michigan 48686-0994 (US)
(72) Inventor: Bodine, Bradley L., Carrollton, Kentucky 41008 (US); Kaczynski, Jerome James, Auburn, Michigan 48611 (US); Kohane, Joseph Peter, Madison, Indiana 47250 (US); Vetter, Mark Edward, Burlington, Kentucky 41005 (US)
(74) Representative: Fleischer, Holm Herbert, Dr.

(56) References cited:
- EP-A- 0 684 070
- US-A- 3 679 373
- US-A- 3 983 927

## Description

The present invention is a fluidized-bed reactor. This reactor is improved to reduce thermal and mechanical stresses on heat exchange elements positioned therein, thereby improving reactor reliability. Our improvement is achieved by retaining and positioning U-shaped heat exchange elements and stabilizing clips in such a manner that solids accumulation and distortive stresses are reduced. The product fluidized-bed reactor is especially useful for production of halosilanes by the contact of hydrogen halide with particulate silicon or for the production of organosilanes by the contact of organic halides with particulate silicon.

It is known that exothermic gas/solid reactions are carried out in fluidized-bed reactors. Such reactors have proven to be highly successful, especially in the preparation of halosilanes and organosilanes by so-called direct synthesis methods. Therein, particulate silicon is reacted with either a hydrogen halide or organic halide. These exothermic reactions were originally described in U.S. Patent 2,380,995. Similar prior art is disclosed in U.S. Patents 2,389,931 and 3,133,109 which describe the conduct of such reactions in a fluidized-bed reactor having a horizontally positioned heat exchange element. Moreover, U.S. Patent 4,176,710 teaches a fluidized-bed reactor, having vertical heat-exchange tubes with positioning clips between adjacent heat exchange tubes, to stabilize the position of said tubes.

Typical commercial processes using fluidized-bed reactors for the manufacture of halosilanes and organohalosilanes are conducted at temperatures within a range of 275°C. to 350°C. In such reactors one or more gases are fed to the reactor at a velocity sufficient to create a fluidized-bed of the particulate silicon. The fluidized particulate silicon creates distortive stresses on heat exchange elements positioned within the reactor as well as abrasion. However, the highly-exothermic reaction of these components creates a potential for much higher localized temperatures in the reactor causing hot-spots. Both the process temperature and these localized hot-spots can cause significant thermal stresses on the heat exchange elements positioned within fluidized-bed reactors. All these stresses limit the useful life of the heat exchange elements of a fluidized-bed reactor.

Particularly problematic is the occurrence of localized-hot spots, with extreme temperature gradients causing significant thermal stresses on heat exchange elements. These hot-spots are most likely to occur in the reactor on surfaces on which the particulates accumulate. These hot spots can cause carbon deposition which further compromise heat exchange and also exacerbate the problems associated with hot spots in the reactor. Carbon accumulations eventually build to the level where they dislodge from the surface at which they formed and then fall into the reactor wedging between adjacent heat exchange tubes thereby creating both distortive physical stresses and hot spots.

The thermal stress and distortive physical stress caused by hot spots and dislodged solids can, in extreme cases, cause disruption of the physical integrity of the heat exchange tubes producing leakage of heat exchange media into the reactor. In less extreme cases, these stresses cause distortion or loosening of tube clips and/or warping of heat exchange tubes thereby allowing adjacent tubes to contact each other causing abrasion that can shorten the useful life of the heat exchange tubes. In addition, solids accumulation on structures within the reactor, especially of carbon, can be costly to remove during reactor maintenance.

The present invention provides a fluidized-bed reactor designed to reduce the potential for solids accumulation on surfaces in the reactor and to remediate the attendant hot-spots. This reduced potential for solids accumulation is created by (1) using a discontinuous support structure for retaining support beams from which U-shaped heat exchange elements are vertically suspended, (2) positioning the U-shaped heat exchange elements to straddle the support beams, (3) positioning the U-shaped heat exchange elements in the reactor to form an array where the ends of the array have an essentially conical shape, and (4) then locating positioning clips affixed to the U-shaped heat exchange elements in one or more essentially conical arrays. Additionally, the heat exchange elements near to the reactor wall are positioned on a radius with the wall thereby reducing distortive stresses due to gas and particulate flow along the wall.

The present invention provides a fluidized-bed reactor comprising a vessel having positioned therein a plurality of essentially vertical U-shaped heat exchange elements and one or more of the following structural elements: (1) essentially horizonal support beams retained by a continuous ledge circumscribing the inner wall of said vessel with upper ends of the heat exchange elements being retained by said support beams and (2) a plurality of positioning clips affixed to the U-shaped heat exchange elements. Our fluidized-bed reactor is characterized by comprising feature (a) and optionally one or more of the features (b) to (d):
(a) a discontinuous support structure for retaining the support beams,
(b) U-shaped heat exchange elements of varying length positioned within the reactor vessel forming an array where the ends of the array forms an essentially conical shape,
(c) U-shaped heat exchange elements straddling the support beams, and
(d) positioning clips affixed to the U-shaped heat exchange elements forming one or more arrays essentially conical in shape.

The resultant fluidized-bed reactor is especially useful for the production of halosilanes by the reaction of hydrogen halides with particulate silicon or for the production of organosilanes by the reaction of organic halides with particulate silicon. More particularly, our fluidized-bed reactor is useful, for example, for the production of chlorosilanes by contact of hydrogen chloride with particulate silicon or for the production of methylsilane and methylchlorosilanes by the reaction of methyl chloride with particulate silicon. Our reactor is especially useful for the production of methylsilane and methylchlorosilanes by the reaction of methyl chloride with particulate silicon in the presence of a catalyst comprising copper.

By way of example, and to illustrate the present invention, reference is made to the figures provided herein. Although a preferred embodiment of our fluidized-bed reactor is described hereinafter, it will be understood that this invention is not limited to just this embodiment or applications.
Figure 1 is a schematic representation of our fluidized-bed reactor.
Figure 2 is a schematic three-dimensional representation of the surface presented by the conical ends of an array of heat-exchange elements and of affixed positioning clips.
Figure 3a is a schematic top view of a fluidized-bed reactor having a plurality of support beams retained in an essentially horizonal position by a plurality of shelves. In Figure 3a, a plurality of U-shaped heat exchange elements straddle the support beams and are attached thereto. The U-shaped heat exchange elements are aligned with the radius of the inner wall of the shell of the fluidized-bed reactor. Figure 3b is a lateral view of a useful discontinuous support structure design and Figure 3c is a top view of the useful discontinuous support structure design.
Figure 4 is a schematic representation of a T and C type positioning clip useful for stabilizing the U-shaped heat exchange elements.

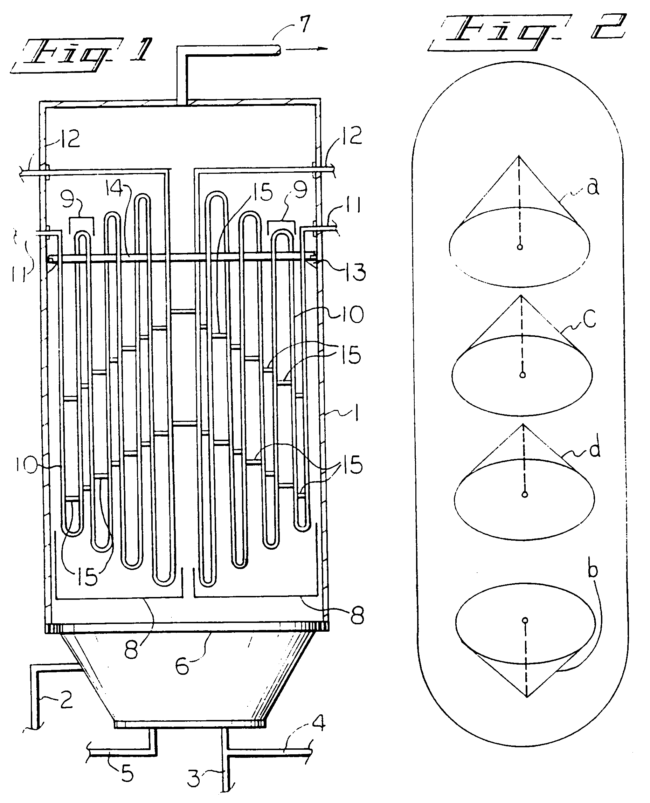

In Figure 1, our fluidized-bed reactor comprises shell **1** having inlet **2** for feeding halogen halide or organic halide into the reactor, inlet **3** for feeding particulate silicon to said reactor, inlet **4** for feeding a fluidizing gas into the reactor and outlet **5** for removing spent silicon bed from the reactor. Inlets **2-4** and outlet **5** are separated from the reaction chamber of our fluidized-bed reactor by distributor plate **6**. Products, by-products and unreacted gases are removed from the fluidized-bed reactor through outlet **7**.

Fluidized-bed reactor shell **1** is made of standard materials for fabricating such reactors. When the reactor is used for contacting particulate silicon with a halogen halide or organic halide, the reactor is fabricated, for example from carbon steel or stainless steel. The position of inlets **2-4** and outlet **5** and **7** are not critical and can be varied as known in the art. Likewise, the specific number of inlets and outlets are not critical to the present invention and can be varied depending upon the end-use of the claimed fluidized-bed reactor.

Positioned in our fluidized-bed reactor vessel formed by shell **1** is one or more heat exchange bundles **8**, with each bundle comprising a plurality of essentially vertical U-shaped heat exchange elements **9**. U-shaped heat exchange elements **9** are formed from materials similar to those used to fabricate shell **1**. The number of heat exchange bundles **8** is not critical to the present invention and will depend upon the reactor size. In general, it is preferred that a plurality of heat exchange bundles are present in the reactor since this allows for more uniform heat control. Each heat exchange bundle **8** has a heat exchange fluid inlet **11** and a heat exchange fluid outlet **12**. Each heat exchange bundle **8** is comprised of a plurality of essentially vertical U-shaped heat exchange elements **9**. By "essentially vertical", it is meant that the U-shaped heat exchange elements **9** are more aligned with the vertical axis of the vessel than with the horizontal axis. For this invention, the term "U-shaped heat exchange element" refers to a structure comprising two heat exchange tubes **10** connected by a U-shaped bend. The number of U-shaped heat exchange elements **9** comprising heat exchange bundle **8** is not critical and is one or more. Preferred is when heat exchange bundle **8** comprises a plurality of U-shaped heat exchange elements **9**.

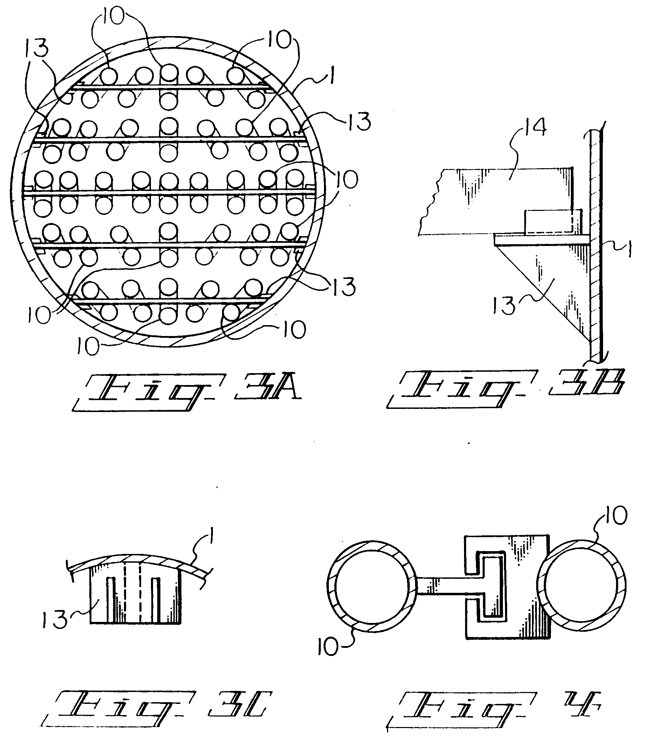

In our preferred embodiment, U-shaped heat exchange elements **9** are of varying length allowing them to be positioned within the reactor vessel forming an array where the upper and lower ends of the array create an essentially conical-shaped surface. A schematic three-dimensional representation of the surface present by the conical ends of such an array is provided in Figure 2, where the conical top-end surface of the array is labelled "a" and the conical bottom-end surface of the array is labelled "b". By "essentially conical", it is meant that the array is arranged such that the longest U-shaped heat exchange elements are approximately centrally located in the array with a progression toward shorter elements at the periphery of the reactor. It is understood that such a progression from longer to shorter elements is not necessarily a smooth progression and that the longest tubes are not exactly centered in the array. Furthermore, a U-shaped heating exchange element **9** may be comprised of heat exchange tubes **10** that are of equal or unequal length.

Our claimed fluidized-bed reactor has a discontinuous support structure for retaining support beams **14** in an essentially horizonal position. By "essentially horizontal", it is meant that the support beams are more aligned with the horizontal axis of the vessel than with the vertical axis. The discontinuous support structure can he formed by a plurality of shelves **13**. Shelves **13** and support beams **14** can be formed of the same materials used to form shell **1**. Shelves **13** can be fastened to the inner wall of shell **1** by standard methods such as welding, bolting and the like. The use of a plurality of shelves **13** in the present reactor provides an improvement over prior fluidized-bed reactors which use a continuous ledge circumscribing the inner wall of the reactor. Such a continuous ledge provides a surface on which particulates accumulate causing the above problems associated with accumulations. By providing an individual shelf for the ends of each support beam, the total surface area for particulate accumulation is significantly reduced. The design of shelves **13** is critical only in that shelves **13** must have sufficient strength to retain support beam **14** in the desired position and to provide a reduced surface for particulate accumulation. Figure 3a schematically illustrates a top view of our reactor, having attached to the inner wall of shell **1**, a plurality of shelves **13** retaining the ends of a plurality of support beams **14**. Figure 3b illustrates a side view of a useful configuration of shelves **13** and Figure 3c illustrates a top view of the useful configuration of shelves **13**. The number of shelves **13** useful in the present reactor will depend upon the number of support beams **14** needed in the reactor.

The position of the plurality of U-shaped heat exchange elements **9** is maintained in our reactor by support beams **14**. In our preferred embodiment, the U-shaped heat exchange elements **9** straddle the support beam as illustrated in Figures 1 and 3a. It is known to fix U-shaped heat exchange elements to a support beam in a parallel configuration where each heat exchange tube of the U-shaped heat exchange element is attached to the same side of the support beam. We have found that when our U-shaped heat exchange element straddles the support beam, it significantly reduces the surface area on which particulates accumulate. By "straddle", it is meant that the two heat exchange tubes **10** connected by a U-shaped bend, comprising our U-shaped heat exchange element **9**, are positioned on opposite sides of the support beam. The method of attaching these U-shaped elements **9** to support beam **14** is not critical and is any of those generally known in the art. Each tube of the U-shaped heat exchanged element is attached to the support beam, as illustrated in Figure 3a, by welding using any necessary spacers.

In reactor designs similar to our preferred embodiment, where the particulates and fluidizing gases are fed in at the bottom of the reactor, a typical flow pattern is up the central portion of the reactor with a return flow along the sides of the reactor. This flow pattern places stress on the U-shaped heat exchange elements positioned near the inner wall of the reactor. We have found that this stress is minimized by positioning at least the peripheral U-shaped heat exchange elements straddling the support beams on an angle which aligns the U-shaped bends with approximately the radius of the inner wall of shell **1**, as illustrated in Figure 3a. The U-shaped bends may then be rotated to a position adjacent to heat exchange tubes **10** within a heat exchange bundle such that they are easily clipped together thereby forming a three-dimensional structure.

In our preferred embodiment, the lower ends of heat exchange tubes **10** comprising U-shaped heat exchange elements **9** are stabilized by a plurality of connecting and positioning clips **15**. Positioning clips **15** are located between adjacent heat exchange tubes **10** within a heat exchange bundle **8** or alternatively are located between adjacent heat exchange tubes **10** of different heat exchange bundles **8**. The structure of positioning clips **15** is not critical and can be any of those known in the art. Positioning clips **15** can optionally be welds, with or without intervening spacers between adjacent heat exchange tubes **10**. Positioning clips **15** are similar to those claimed in U.S. Patent 4,176,710. Positioning clips **15** can be of a T or C design as illustrated in Figure 4, where the head of the T component is allowed to slide in the slot of the C component, allowing for a controlled vertical displacement of the connected heat exchange tubes 10 relative to each other.

When the plurality of positioning clips are affixed to the heat exchange elements forming one or more positioning clip arrays essentially conical in shape, the deposition of solids within the heat exchange elements are reduced. By "essentially conical," in regards to the positioning clips, it is meant that, within the array formed by the heat exchange tubes, the positioning clips are arranged in one or more three-dimensional structures along a conical surface as schematically represented in Figure 2, by structures c and d. Those skilled in the art will recognize that, to achieve the benefit of the present invention, such an array does not have to be a smooth progression and that the highest point need not be exactly centered in the array.

### Example

A fluidized-bed reactor, similar to that described as the preferred embodiment described herein, was used for the reaction of methyl chloride with silicon metalloid to form methylchlorosilanes for a period of 14 months. Thereafter, the reactor was opened and visually inspected. We observed that: none of the heat exchange tubes were bent or broken; there was no distortion of the U-shaped heat exchange tubes; there was no broken or damaged positioning clips; there was minimal solids build-up in the area between support shelves and there was minor solids build up on the support clips toward the center of the conical array of support clips.

## Claims

1. A fluidized-bed reactor comprising a vessel having positioned therein one or more support beams retained in an essentially horizontal position by a continuous ledge circumscribing the inner wall of the vessel and a plurality of essentially vertical U-shaped heat exchange elements the upper-ends being retained by the support beams, characterized by replacing the continuous ledge with a discontinuous support structure for retaining said support beams.

2. The fluidized-bed reactor of claim 1 further characterized in that the U-shaped heat exchange elements are of varying length and said elements are positioned within the vessel to form an array having an upper and a lower end where the ends of the array have an essentially conical shape.

3. The fluidized-bed reactor of claim 1 further characterized by having the positioning clips affixed to the U-shaped heat exchange elements forming one or more arrays essentially conical in shape.

4. The fluidized-bed reactor of claim 1 further characterized in that the U-shaped heat exchange elements straddle the support beams.

5. The fluidized-bed reactor of claim 1 further characterized by positioning clips affixed to the U-shape heat exchange elements to form a three dimensional stabilization of said heat exchange elements and the positioning clips form one or more arrays essentially conical in shape.

6. The fluidized-bed reactor of claim 4 wherein the U-shaped heat exchange elements straddling the support beams are on an angle aligning them with the radius of the inner wall of the vessel.

## Patentansprüche

1. Wirbelschichtreaktor enthaltend ein Gefäß mit einem oder mehreren darin angeordneten Stützbalken, die durch einen umlaufenden, die innere Wandung des Gefäßes begrenzenden Sims in einer im wesentlichen horizontalen Position gehalten werden, und eine Mehrzahl von im wesentlichen vertikalen, U-förmigen Wärmeaustauschelementen, deren obere Enden durch die Stützbalken gehalten werden, gekennzeichnet durch Ersetzen des umlaufenden Sims durch eine diskontuierliche Trägerstruktur zum Halten der Stützbalken.

2. Wirbelschichtreaktor nach Anspruch 1, weiter dadurch gekennzeichnet, daß die U-förmigen Wärmeaustauschelemente eine unterschiedliche Länge aufweisen und die Elemente innerhalb des Gefäßes angeordnet sind, um eine Anordnung mit einem oberen und einem unteren Ende zu bilden, wobei die Enden der Anordnung eine im wesentlichen konische Form aufweisen.

3. Wirbelschichtreaktor nach Anspruch 1, weiter dadurch gekennzeichnet, daß die an den U-förmigen Wärmeaustauschelementen befestigten Positionierklemmen ein oder mehrere im wesentlichen konusförmige Anordnungen bilden.

4. Wirbelschichtreaktor nach Anspruch 1, weiter dadurch gekennzeichnet, daß die U-förmigen Wärmeaustauschelemente die Stützbalken überbrücken.

5. Wirbelschichtreaktor nach Anspruch 1, weiter gekennzeichnet durch Positionierklemmen, die an den U-förmigen Wärmeaustauschelementen befestigt sind, um eine dreidimensionale Stabilisierung der Wärmeaustauschelemente zu bilden, und daß die Positionierklemmen eine oder mehrere im wesentlichen konusförmige Anordnungen bilden.

6. Wirbelschichtreaktor nach Anspruch 4, wobei die U-förmigen, die Stützbalken überspannenden Wärmeaustauschelemente in einem Winkel liegen, so daß sie mit dem Radius der inneren Wandung des Gefäßes fluchten.

## Revendications

1. Un réacteur à lit fluidisé comprenant un récipient dans lequel sont disposées une ou plusieurs poutres de support soutenues dans une position essentiellement horizontale par un rebord continu entourant la paroi interne du récipient et plusieurs éléments échangeurs de chaleur essentiellement verticaux en forme de U dont les extrémités supérieures sont retenues par les poutres de support, caractérisé par le remplacement du rebord continu par une structure de support discontinue pour soutenir lesdites poutres de support.

2. Le réacteur à lit fluidisé de la revendication 1, caractérisé de plus en ce que les éléments échangeurs de chaleur en forme de U ont des longueurs variables et lesdits éléments sont disposés à l'intérieur du récipient de manière à former un assemblage ayant une extrémité supérieure et une extrémité inférieure, les extrémités de l'assemblage ayant une forme essentiellement conique.

3. Le réacteur à lit fluidisé de la revendication 1, caractérisé de plus en ce qu'il comporte des attaches de positionnement fixées aux éléments échangeurs de chaleur en forme de U formant un ou plusieurs assemblages de forme essentiellement conique.

4. Le réacteur à lit fluidisé de la revendication 1, caractérisé de plus en ce que les éléments échangeurs de chaleur en forme de U sont placés à cheval sur les poutres de support.

5. Le réacteur à lit fluidisé de la revendication 1, caractérisé de plus par des attaches de positionnement fixées aux éléments échangeurs de chaleur en forme de U de manière à établir une stabilisation tridimensionnelle desdits éléments échangeurs de chaleur et en ce que les attaches de positionnement forment un ou plusieurs assemblages de forme essentiellement conique.

6. Le réacteur à lit fluidisé de la revendication 4, dans lequel les éléments échangeurs de chaleur en forme de U placés à cheval sur les poutres de support font un angle qui les aligne avec le rayon de la paroi interne du récipient.
